# EUROPEAN PATENT APPLICATION

(11) **EP 4 851 932 A2**
(43) Date of publication of application: **09.12.2026**
(21) Application number: 26188356.5
(22) Date of filing: 29.06.2026
(51) Int. Cl.: G06T 11/60

(54) **METHOD AND APPARATUS FOR PROCESSING ENVIRONMENT RECONSTRUCTION IMAGE, ELECTRONIC DEVICE, AND MEDIUM**

(30) Priority: 30.01.2026 CN 202610140436
(71) Applicant: XG TECH PTE. LTD., Singapore 179098 (SG)
(72) Inventor: LIN, Wei, 179098 Singapore (SG); GONG, Yi chen, 179098 Singapore (SG)
(74) Representative: v. Bezold & Partner Patentanwälte - PartG mbB

(57) **Abstract**

A method and an apparatus for processing an environment reconstruction image, an electronic device, and a medium are disclosed and relate to the field of intelligent driving. The method includes: performing semantic parsing on a style instruction input by a user to an intelligent cockpit to obtain a target asset tag corresponding to at least one asset category, the style instruction being used for instructing an adjustment of an asset style of the environment reconstruction image corresponding to the intelligent cockpit; determining a plurality of pieces of target asset data based on the target asset tag corresponding to each asset category; and correspondingly replacing, in the environment reconstruction image, a plurality of pieces of original asset data based on the plurality of pieces of target asset data to obtain a target environment reconstruction image.

## Description

### TECHNICAL FIELD

The present disclosure relates to the field of intelligent driving, and in particular, to a method and an apparatus for processing an environment reconstruction image, an electronic device, and a medium.

### BACKGROUND

An intelligent cockpit of a vehicle can display an SR (Surrounding Reality) image (i.e., environment reconstruction display) through a display screen. The SR image is an image generated from surrounding environment data of the vehicle collected by a vehicle sensor, to enable a user to observe surrounding conditions of the vehicle by the SR image.

In the prior art, when intending to change an asset style of the SR image, the user often needs to perform multi-step click-and-select operations manually through the display screen, resulting in degraded driving experience of the user during driving.

### SUMMARY

In view of the above technical problem, the present disclosure provides a method and an apparatus for processing an environment reconstruction image, an electronic device, and a medium, to resolve the problem that a user has to perform multi-step click-and-select operations manually through a display screen before changing an asset style of an SR image.

According to a first aspect of the present disclosure, there is provided a method for processing an environment reconstruction image, including:
performing semantic parsing on a style instruction input by a user to an intelligent cockpit to obtain a target asset tag corresponding to at least one asset category, the style instruction being used for instructing an adjustment of an asset style of the environment reconstruction image corresponding to the intelligent cockpit;
determining a plurality of pieces of target asset data based on the target asset tag corresponding to each asset category; and
correspondingly replacing, in the environment reconstruction image, a plurality of pieces of original asset data based on the plurality of pieces of target asset data to obtain a target environment reconstruction image.

According to a second aspect of the present disclosure, there is provided an apparatus for processing an environment reconstruction image, including:
a tag determination module, configured for performing semantic parsing on a style instruction input by a user to an intelligent cockpit to obtain a target asset tag corresponding to at least one asset category, the style instruction being used for instructing an adjustment of an asset style of the environment reconstruction image corresponding to the intelligent cockpit;
an asset determination module, configured for determining a plurality of pieces of target asset data based on the target asset tag corresponding to each asset category; and
an image processing module, configured for correspondingly replacing, in the environment reconstruction image, a plurality of pieces of original asset data based on the plurality of pieces of target asset data to obtain a target environment reconstruction image.

According to a third aspect of the present disclosure, there is disclosed a non-transitory computer readable storage medium, on which a computer program is stored, wherein the computer program, when executed by a processor, causes the processor to implement the method for processing an environment reconstruction image of any one of the above embodiments.

According to a fourth aspect of the present disclosure, there is disclosed an electronic device, including:
a processor; and
a memory, configured for storing instructions executable by the processor, wherein
the processor is configured for reading the executable instructions from the memory, and executing the instructions to implement the method for processing an environment reconstruction image of any one of the above embodiments.

According to the method and apparatus for processing an environment reconstruction image, the electronic device, and the medium provided in the above embodiments of the present disclosure, semantic parsing is performed on a style instruction input by a user to an intelligent cockpit to obtain a target asset tag corresponding to at least one asset category, the style instruction being used for instructing an adjustment of an asset style of the environment reconstruction image corresponding to the intelligent cockpit. Then, a plurality of pieces of target asset data are determined based on the target asset tag corresponding to each asset category. Finally, a plurality of pieces of original asset data are correspondingly replaced, in the environment reconstruction image, based on the plurality of pieces of target asset data to obtain a target environment reconstruction image with a replaced asset style. It can be seen that, with the technical solutions provided in the above embodiments of the present disclosure, the user no longer needs to perform cumbersome manual multi-step click-and-select operations, but instead can trigger, by inputting a single style instruction to the intelligent cockpit, an automatic switching process of the entire asset style for the intelligent cockpit, thereby reducing triggering steps for changing the asset style in the environment reconstruction image and improving driving safety and driving interaction experience for the intelligent cockpit.

### BRIEF DESCRIPTION OF DRAWINGS

FIG. 1 illustrates an architecture of an in-vehicle system according to an exemplary embodiment of the present disclosure;
FIG. 2 is a schematic flowchart illustrating a method for processing an environment reconstruction image according to an exemplary embodiment of the present disclosure;
FIG. 3 is a schematic flowchart illustrating step S201 of the method for processing an environment reconstruction image according to an exemplary embodiment of the present disclosure;
FIG. 4 is a schematic flowchart illustrating step S202 of the method for processing an environment reconstruction image according to an exemplary embodiment of the present disclosure;
FIG. 5 is a schematic flowchart after step S2025 of the method for processing an environment reconstruction image according to an exemplary embodiment of the present disclosure;
FIG. 6 is a schematic flowchart illustrating step S2021 of the method for processing an environment reconstruction image according to an exemplary embodiment of the present disclosure;
FIG. 7 is a schematic flowchart after step S201 of the method for processing an environment reconstruction image according to an exemplary embodiment of the present disclosure;
FIG. 8 is a schematic flowchart illustrating step S203 of the method for processing an environment reconstruction image according to an exemplary embodiment of the present disclosure;
FIG. 9 is a schematic diagram illustrating a structure of an apparatus for processing an environment reconstruction image according to an exemplary embodiment of the present disclosure; and
FIG. 10 is a diagram illustrating a structure of an electronic device according to an embodiment of the present disclosure.

### DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

### Overview of Application

An intelligent cockpit of a vehicle is a core area inside the vehicle that integrates a variety of intelligent interaction functions. The intelligent cockpit can provide a user with a convenient, comfortable, and safe driving and riding experience by integrating various types of technologies such as display, control, and perception.

An environment reconstruction display function is an important interaction function of the intelligent cockpit. The environment reconstruction display function can collect external environment perception data through sensors of the vehicle, such as an in-vehicle camera and in-vehicle radar, and construct in real time and display virtual images or augmented reality images of the surrounding environment of the vehicle on display interfaces of the intelligent cockpit, such as a dashboard and a central control screen. Based on the environment reconstruction display function, the user within the intelligent cockpit can intuitively understand road condition information around the vehicle, for example, road markings, pedestrians, other vehicles, and obstacles. In this way, blind spots in a field of view of the user during driving can be reduced, thereby improving driving safety and convenience.

An environment reconstruction display image may include a variety of asset styles. In different scenarios, the user can switch the asset styles of the environment reconstruction display image to obtain a visual experience that better conforms to personal preferences or scenario requirements. For example, during long-distance driving, the user may wish the environment reconstruction display image to present a soft and soothing style to reduce visual fatigue; while at night or under complex road conditions, the user may wish the environment reconstruction display image to switch to a night asset style, so as to reduce display brightness of the environment reconstruction display image and avoid an excessively large brightness difference between the environment reconstruction display image and the nighttime environment, thereby improving driving safety.

However, the conventional way of adjusting asset styles often requires the user to perform cumbersome click-and-select operations in multi-step menus of the intelligent cockpit to find a settings interface for adjusting the asset style, and then determine the asset style to be switched in the asset style settings interface. Such a multi-step click-and-select adjustment approach can distract driver attention, affect driving safety, and degrade driving experience of the user.

### Exemplary System

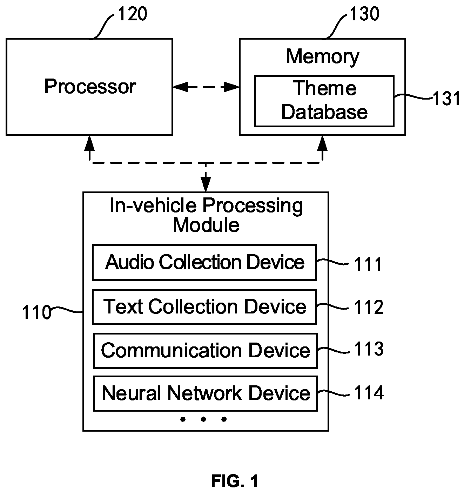

FIG. 1 illustrates an architecture of an in-vehicle system according to an exemplary embodiment of the present disclosure. As shown in FIG. 1, the in-vehicle system in the present disclosure may include an in-vehicle processing module 110, a processor 120, and a memory 130. The in-vehicle processing module 110 is configured for collecting a control instruction input by a user to an intelligent cockpit, and performing parsing, format conversion, and transmission on the control instruction.

As a core computing unit of the in-vehicle system, the processor 120 is connected to the in-vehicle processing module 110 and the memory 130 through an internal bus or in other communication manners, and is responsible for receiving a parsed control instruction from the in-vehicle processing module 110 and controlling the intelligent cockpit to perform a corresponding interaction action according to the parsed control instruction. The memory 130 is configured for storing various data of the intelligent cockpit, so that corresponding data can be retrieved from the memory 130 at any time when the processor 120 responds to the control instruction.

Exemplarily, the in-vehicle processing module 110 may include an audio collection device 111, a text collection device 112, a communication device 113, a neural network device 114, etc.

The audio collection device 111 is configured for collecting a speech control instruction issued by the user within the intelligent cockpit, for example, a speech control instruction such as "Switch navigation interface to dark mode" or "Change in-vehicle ambient light to blue" spoken by the user. Because the processor 120 cannot directly respond to a speech control instruction, the in-vehicle processing module can also perform conversion on the speech control instruction to convert an analog audio signal into a digital audio signal processable by the processor 120.

The text collection device 112 is configured for collecting a text control instruction input by the user to the intelligent cockpit. Exemplarily, the intelligent cockpit includes a display screen, which may be a touch display screen, allowing the user to directly input a text control instruction by performing a touch input operation such as tapping, sliding, or handwriting on the display screen. For example, when the user manually inputs "Turn on air conditioner AC mode" on the display screen, the text collection device can collect the text "Turn on air conditioner AC mode" as a text input instruction.

Exemplarily, the intelligent cockpit includes physical buttons, and the user can input a text control instruction by pressing the physical buttons. Exemplarily, the user selects a specific function option through a button to generate a text control instruction.

Exemplarily, after receiving the control instruction, the processor 120 may parse a format of the control instruction. If the control instruction is a speech control instruction, the processor 120 needs to first convert the speech control instruction into instruction text, and then perform semantic parsing on the instruction text to parse out instruction intent from the speech control instruction, thereby performing a corresponding interaction action. If the control instruction is a text control instruction, the processor 120 does not need to perform speech-to-text conversion, but instead, directly extracts instruction text from the text control instruction and performs a subsequent interaction process.

The communication device 113 is responsible for exchanging data with the processor 120, the memory 130, and other in-vehicle devices within the intelligent cockpit (such as an audio system, an air conditioning controller, and a navigation module), to implement transmission of the control instruction and related data. Exemplarily, the communication device 113 can also perform remote data exchange with a server of the intelligent cockpit, such as receiving a system update instruction or a map data update package delivered by the server, or uploading user driving habit data, vehicle status information, or the like to the server, to achieve continuous optimization and upgrading of intelligent cockpit functions.

The communication device 113 can support a variety of communication protocols, such as a CAN bus protocol and an Ethernet protocol, which can ensure stable and real-time data transmission with different types of in-vehicle devices, thereby enabling the intelligent cockpit system to work efficiently and collaboratively.

The neural network device 114 is configured for performing deep semantic parsing on a collected speech control instruction or text control instruction to obtain a parsed control instruction. For example, when the user speaks a vague speech control instruction such as "Make it brighter here", the neural network device 114 can accurately understand, in combination with a current cockpit environment (such as current light intensity, time, and other information) and historical operation habits of the user, whether the user intends to adjust in-vehicle lighting brightness or brightness of the display screen, and convert the parsed control instruction into a format recognizable by the processor 120, so that the processor 120 can increase the in-vehicle lighting brightness or the brightness of the display screen in response to the control instruction.

Exemplarily, the memory 130 may include a theme database 131, for storing asset data of different asset categories under various theme styles of the environment reconstruction image, such as background image data, model asset data, and various dynamic effect asset data of the environment reconstruction image. The background image data may include scene images such as roads, buildings, and vegetation under different weather conditions (such as sunny, rainy, and foggy) and in different time periods (such as daytime, dusk, and nighttime). The model asset data may include geometric data and texture data of three-dimensional models of vehicles, pedestrians, traffic signs, obstacles, and the like. The dynamic effect asset data includes sequential frame data or particle effect parameters for simulating dynamic features of real-world environments, such as raindrops, snowflakes, light and shadow changes, and water flows.

The environment reconstruction image may include a plurality of different theme styles, and these theme styles may be preset in the memory 130 of the intelligent cockpit. Exemplarily, the memory 130 may store different asset data based on the theme styles to form a complete set of asset data corresponding to the theme styles, so that when needing to adjust an asset style of the environment reconstruction image, the user can retrieve at any time a complete set of asset data of the corresponding theme style from the memory 130.

### Exemplary Method

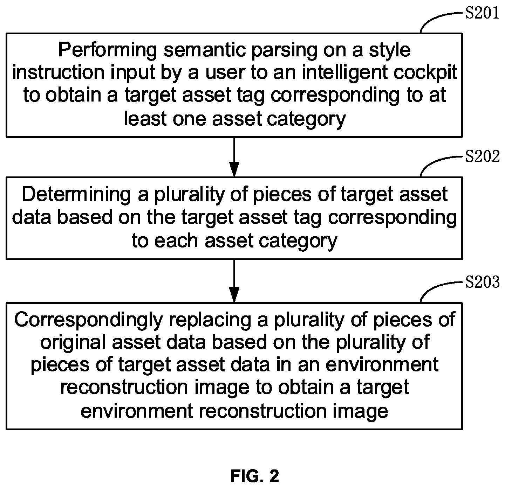

FIG. 2 is a schematic flowchart illustrating a method for processing an environment reconstruction image according to an exemplary embodiment of the present disclosure. This embodiment may be applied to a vehicle, an in-vehicle electronic device, or an electronic device. The following embodiment is exemplarily described with an in-vehicle electronic device as an execution subject. As shown in FIG. 2, the method includes the following steps:

S201: Performing semantic parsing on a style instruction input by a user to an intelligent cockpit to obtain a target asset tag corresponding to at least one asset category.

In some embodiments, the style instruction being used for instructing an adjustment of an asset style of the environment reconstruction image corresponding to the intelligent cockpit. The style instruction may adjust asset styles of one or more pieces of asset data in the environment reconstruction image, or may adjust an overall asset style of the environment reconstruction image. Exemplarily, the style instruction may be "Adjust roadside grass to a 'cartoon' style" to adjust an asset style of vegetation asset data in the environment reconstruction image. Exemplarily, the style instruction may alternatively be "Switch interface style to 'cyberpunk style'" to adjust the overall asset style of the environment reconstruction image.

In some embodiments, input approaches for the style instruction may include a speech input approach and a text input approach. Exemplarily, for the speech input approach, the user can activate the audio collection device of the intelligent cockpit by speaking a designated wake-up expression, so that the audio collection device can collect a speech control instruction subsequently issued by the user within the intelligent cockpit. The speech control instruction is the style instruction input by the user. For example, when the user says "Hello, Xiao X, adjust the roadside grass to a 'cartoon' style," "Hello, Xiao X" is the wake-up expression, and the subsequent content "adjust the roadside grass to a 'cartoon' style" constitutes the style instruction in speech form.

For the text input approach, the user can input a text control instruction through a touch display screen, a physical button, or a connected external input device (such as an in-vehicle keyboard or a mobile phone terminal) of the intelligent cockpit. The text control instruction is the style instruction input by the user.

In some embodiments, the display screen of the intelligent cockpit can display an interaction interface, and a designated area of the interaction interface can display a text input box, through which the user can input text content such as "Adjust trees on both sides of the road to an 'ink painting' style." In this case, the intelligent cockpit parses the input text content into a specific style instruction through a controller.

In some embodiments, the intelligent cockpit can perform semantic parsing on the style instruction through the neural network device to extract an asset category included in the style instruction and a target asset tag corresponding thereto. Exemplarily, the neural network device may include a pre-trained natural language processing model, such as a BERT model or an improved version of a neural network model thereof. The asset category is used for representing different types of asset data in the environment reconstruction image. For example, buildings, sky, roads, vegetation, VFX (Visual Special Effects), color parameters, etc. are all different asset categories. Each asset category corresponds to a collection of asset data having similar visual features or functional attributes in the environment reconstruction image. For example, when the vehicle is driving in a city, there are a plurality of buildings on both sides of the road. These buildings have similar building features and belong to the same asset category.

The target asset tag is used for representing a specific style to which the asset category needs to be adjusted, such as "cartoon", "ink painting", "cyberpunk", "minimalist", or "retro". An asset tag may be associated with a preset style feature library stored in the memory, and each asset tag corresponds to a set of specific visual style parameters, such as color saturation, line thickness, texture features, or light and shadow effects.

Exemplarily, for the style instruction "Adjust the roadside grass to a 'cartoon' style," an asset category of the style instruction can be extracted as "vegetation" and a target asset tag as "cartoon" through semantic parsing, thereby ensuring that a parsing result can accurately reflect style adjustment intent of the user.

S202: Determining a plurality of pieces of target asset data based on the target asset tag corresponding to each asset category.

After the target asset tag is determined, a memory asset library of the memory can be queried for the target asset data based on the target asset tag. The target asset data is asset data that matches both the asset category and the target asset tag. Exemplarily, if the asset category is "vegetation" and the target asset tag is "cartoon", the memory asset library can be queried for cartoon-style vegetation asset data matching both the "vegetation" category and the "cartoon" asset tag. The cartoon-style vegetation asset data includes asset data conforming to a "cartoon" asset style, such as leaf shapes with cartoon elements, color combinations, and simplified texture details. When the style instruction is "Adjust buildings to a cyberpunk style," the asset category is "buildings" and the target asset tag is "cyberpunk". The memory asset library can be queried for building asset data with a cyberpunk feel and matching both the "buildings" category and the "cyberpunk style" tag. The building asset data may include features specific to the cyberpunk style, such as neon light effects, towering geometric block structures, and strong color contrasts, thereby providing precise asset support for subsequent environment image style adjustment.

In some embodiments, the environment reconstruction image may include asset data of asset categories corresponding to the target asset tag, for example, data of a plurality of buildings of different heights. If the asset style of the data of these buildings of different heights is adjusted based on data of a same building, the realism and harmony of the environment reconstruction image will be compromised. Therefore, to ensure accuracy and harmony of the style adjustment of each piece of asset data in the environment reconstruction image, differentiated style adjustment processing needs to be performed for target asset data of different features.

In some embodiments, to enhance the features of the target asset data, matching style element details can be added to these different target asset data. In an example in which the target asset tag is "cyberpunk style" and the target asset data is building asset data, neon signs conforming to the cyberpunk style can be added to the asset data. A light effect of the neon signs can be adjusted to high color saturation to highlight color features of the cyberpunk style. For low-rise building asset data, smaller-scale neon signs can be used, while for high-rise building asset data, relatively larger-scale neon signs can be used.

Through matching of differentiated target asset data for asset data of different features in the environment reconstruction image, inherent attributes of each piece of the asset data can be precisely fitted during the asset style adjustment process, and scale imbalance or detail distortion caused by unified style processing can be avoided, thereby improving overall realism and stylistic harmony of the environment reconstruction image.

S203: Correspondingly replacing, in the environment reconstruction image, a plurality of pieces of original asset data based on the plurality of pieces of target asset data to obtain a target environment reconstruction image.

In some embodiments, position coordinates of an original asset data whose asset style needs to be adjusted can be determined in the environment reconstruction image. For example, a pixel area boundary of the original asset data in the environment reconstruction image can be identified through an image segmentation algorithm, to acquire the position coordinates of the original asset data.

Subsequently, the plurality of pieces of found target asset data are adjusted based on data information of the original asset data to ensure that sizes and angles of the target asset data match spatial proportions and spatial poses of the original asset data in the environment reconstruction image. For example, if a piece of original asset data is building data located on a left side of the road and having a height of 1/3 of a height of the environment reconstruction image, a height of a piece of target asset data (such as a building of a "cyberpunk style") should also be adjusted to 1/3 of the height of the environment reconstruction image, and a relative positional relationship with the road should remain unchanged. In this way, the piece of original asset data is replaced with the piece of adjusted target asset data at position coordinates of the piece of original asset data to obtain a target environment reconstruction image.

In some embodiments, after the replacement of the original asset data with the target asset data, edge blending processing also needs to be performed on asset data whose asset style has not been adjusted, to reduce a sense of incongruity between the target asset data and other asset data in the environment reconstruction image.

Exemplarily, the edge blending processing may include techniques such as edge feathering and color transition smoothing to eliminate splicing seams between the target asset data and the original asset data, allowing the target environment reconstruction image to achieve a natural and coherent visual effect overall.

According to the method provided in this embodiment of the present disclosure, semantic parsing can be performed on a style instruction input by a user to obtain an asset category and a corresponding target asset tag from the style instruction, and then a plurality of pieces of target asset data are determined based on the target asset tag. Finally, a plurality of pieces of original asset data are correspondingly replaced, in an environment reconstruction image, based on the plurality of pieces of target asset data to obtain a target environment reconstruction image with a replaced asset style. It can be seen that, according to the method provided in this embodiment of the present disclosure, personalized adjustment can be performed on an asset style of an environment reconstruction image of an intelligent cockpit in a manner of directly inputting a style instruction, without the need to manually perform multi-step click-and-select operations through a display screen of the intelligent cockpit, thereby simplifying an operation process of adjusting the asset style. Meanwhile, such an asset style adjustment method based on semantic parsing improves interaction experience and visual perception of the user.

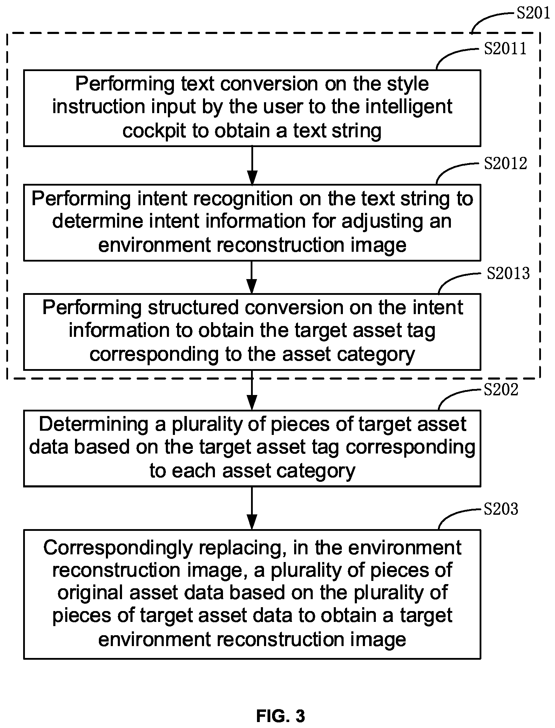

FIG. 3 is a schematic flowchart illustrating step S201 of the method for processing an environment reconstruction image according to an exemplary embodiment of the present disclosure.

As shown in FIG. 3, based on the above embodiment shown in FIG. 2, step S201 may include the following steps:
S2011: Performing text conversion on the style instruction input by the user to the intelligent cockpit to obtain a text string.

In some embodiments, a format of the style instruction can be parsed to determine an input approach for the style instruction. If the style instruction is input to the intelligent cockpit through a speech input approach, that is, the style instruction is a speech control instruction, text conversion needs to be performed on the style instruction to obtain a text string.

In some embodiments, the memory may also store a speech processing model for an in-vehicle environment. Exemplarily, the speech processing model may include an acoustic model and a text model, such as an end-to-end ASR (Automatic Speech Recognition) model based on a deep neural network. Exemplarily, the deep neural network may be a CTC (Connectionist Temporal Classification) model or an attention model. Such an ASR model can effectively suppress noise interference such as wind noise, road noise, or an in-vehicle conversation generated during vehicle driving, ensuring that text conversion can be accurately performed on the style instruction to obtain a text string in a high signal-to-noise ratio environment.

In some embodiments, the text string is a text sequence obtained by converting the style instruction, and content of the text string corresponds to asset data and a corresponding asset style that the user intends to adjust.

In some embodiments, if the style instruction is input to the intelligent cockpit through a text input approach, text conversion is not required, and the text string can be directly extracted from the style instruction.

S2012: Performing intent recognition on the text string to determine intent information for adjusting the environment reconstruction image.

In some embodiments, the memory may also store an LLM parser (Large Language Model parser). The LLM parser is an LLM (Large Language Model) that has undergone instruction fine-tuning, such as a GPT-series model or a Llama-series model. The LLM parser can perform intent recognition on the text string output by the speech processing model to obtain intent information for adjusting the environment reconstruction image.

The intent information is used for representing a specific goal and direction expected by the user for adjusting an asset style of the environment reconstruction image through the style instruction, for example, "Adjust asset data of a specific area to a designated asset style" or "Switch the interface style of the environment reconstruction image to a designated asset style" or "Add asset data of a certain asset style." The intent information may also represent querying for an asset style of the environment reconstruction image, for example, "Determine the current asset style of the environment reconstruction image."

For example, when the text string is "Adjust roadside grass to a 'cartoon' style," the intent information is "Adjust the asset style of vegetation asset data in the environment reconstruction image to a cartoon style". When the text string is "Switch the interface style to a 'cyberpunk style'," the intent information is "Adjust the overall asset style of the environment reconstruction image to a cyberpunk style." The LLM parser performs intent recognition on the text string to clarify whether the user is to adjust local assets of the environment reconstruction image or to adjust the overall style of the environment reconstruction image, further improving accuracy and efficiency of semantic parsing.

S2013: Performing structured conversion on the intent information to obtain the target asset tag corresponding to the asset category.

In some embodiments, the intent information can be input to an LLM. The LLM can extract information slots of a plurality of dimensions from the intent information and perform structured conversion on the information slots of the plurality of dimensions to obtain the target asset tag corresponding to the asset category.

Exemplarily, the structured conversion method may be a JSON (JavaScript Object Notation) conversion method. For example, for intent information "Turn this city into a cyberpunk rainy night with heavy rain," the LLM extracts information slots of a plurality of dimensions, for example, a style slot (base_style): "cyberpunk"; a weather slot (weather): "heavy rain"; a time slot (time_of_day): "night"; and a target slot (target): "city". Then, the LLM can perform structured conversion on the plurality of information slots to obtain "base_style": "cyberpunk", "weather": "heavy_rain", "time_of_day": "night", and "target": "city", that is, target asset tags.

According to the method provided in this embodiment of the present disclosure, style instructions of different input approaches are converted into text strings processable by the intelligent cockpit through text conversion, thereby uniformly processing the style instructions into a text format convenient for intent recognition, and avoiding processing logic confusion caused by differences in input approaches (such as speech, text, and touch selection). Based on this, intent information expressed by the text string is extracted through intent recognition, enabling the intelligent cockpit to precisely understand a style requirement of a user for the environment reconstruction image. Then, through structured conversion, the intent information is converted into target asset tags represented by information slots of a plurality of dimensions, so that a plurality of pieces of target asset data subsequently determined by the intelligent cockpit in a plurality of dimensions can accurately match a style instruction from the user, thereby improving accuracy of adjusting an asset style of the environment reconstruction image by the user.

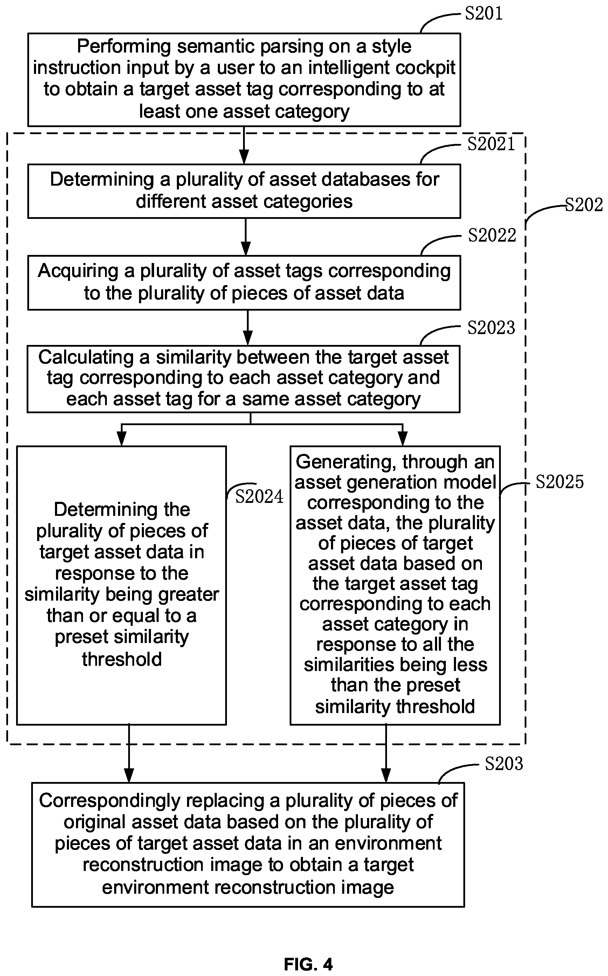

FIG. 4 is a schematic flowchart illustrating step S202 of the method for processing an environment reconstruction image according to an exemplary embodiment of the present disclosure.

As shown in FIG. 4, based on the above embodiment shown in FIG. 2, step S202 may include the following steps:
S2021: Determining a plurality of asset databases for different asset categories.

In some embodiments, the theme database of the memory may be divided into a plurality of asset databases based on asset categories. Each asset database corresponds to an asset category, for example, buildings, VFX, or material of assets. Each asset database may include a plurality of pieces of asset data of the same asset category.

For example, building asset data of an "ink painting style" and building asset data of a "cyberpunk style" belong to a same asset category, that is, both are building asset data. The building asset data of the "ink painting style" and the building asset data of the "cyberpunk style" can be stored in an asset database for the asset category of building asset data, so that when the style instruction requires asset style adjustment of building assets, the asset database corresponding to the building asset data can be queried for the target asset data, thereby improving query efficiency for the target asset data.

In some embodiments, based on asset categories, the plurality of asset databases may include a geometry asset database, a material/shader database, and a VFX database, and the like. The geometry asset database may include asset data related to geometric models, such as vehicle asset data, building asset data, road asset data, and vegetation asset data. The material/shader database may include asset data related to material and shaders, such as cartoon outline shaders, metallic rust material, and holographic transparent material. The VFX database may include databases of VFX such as weather and ambient lighting, for example, weather VFX such as rain, snow, and sandstorms, and ambient light VFX such as dusk, noon, and neon at night.

In some embodiments, the asset database can also be divided into a plurality of sub-databases based on more refined asset categories. Exemplarily, using the geometry asset database as an example, based on different asset categories such as vehicle asset data, building asset data, road asset data, and vegetation asset data, corresponding sub-databases can also be obtained through division, such as a vehicle asset database, a building asset database, a road asset database, and a vegetation asset database.

S2022: Acquiring a plurality of asset tags corresponding to the plurality of pieces of asset data.

The asset tags are tags generated in advance by performing semantic processing on the asset data, and are used for describing style features of the asset data, so as to facilitate accurate positioning and screening of the asset data based on the target asset tag subsequently.

In some embodiments, one piece of asset data may correspond to one asset tag. For example, for building asset data of a "cyberpunk style", its corresponding asset tag is "cyberpunk style". To improve query dimensions of the asset data, one piece of asset data may also correspond to a plurality of asset tags, which may respectively correspond to a type attribute tag, a style attribute tag, and a function attribute tag. Exemplarily, for building asset data of a "cyberpunk style", the asset tags may include a type attribute tag: "building", style attribute tags: "cyberpunk" and "futuristic", and a function attribute tag: "luminous".

It should be noted that, because the asset database corresponds to the asset category of the asset data, the asset tag may not include a category tag, so as to shorten a tag length and improve a speed and accuracy of querying for the target asset data.

In some embodiments, the asset tags can be converted into text embedding vectors (Text Embeddings) through the processor and stored together with the corresponding asset data in the corresponding asset database. Exemplarily, the asset database may be a vector database, such as a Milvus vector database or a Pinecone vector database, supporting efficient similarity queries.

S2023: Calculating a similarity between the target asset tag corresponding to each asset category and each asset tag for a same asset category.

Exemplarily, if the asset category is geometry assets and the target asset tag is "cyberpunk style", the geometry asset database can be positioned based on the asset category. In this case, there is no need to query asset databases not corresponding to the asset category, thereby improving efficiency of determining the target asset data.

In the geometry asset database, a similarity between the target asset tag and an asset tag for each piece of asset data in the geometry asset database can be calculated. For example, when there exists asset data A in the geometry asset database, and its asset tags are "cyberpunk style, futuristic city, and dynamic lighting", the target asset tag "cyberpunk style" can be individually compared with each asset tag for asset data A, and the similarity between the target asset tag and each asset tag can be calculated through a preset semantic similarity algorithm.

S2024: Determining the plurality of pieces of target asset data in response to the similarity being greater than or equal to a preset similarity threshold.

In some embodiments, after the similarity between the target asset tag and each asset tag is calculated, the similarity can be compared with a preset similarity threshold. Exemplarily, the preset similarity threshold may be flexibly set based on a requirement of an actual application scenario, and may be set to, for example, 80%. When a calculated similarity between the target asset tag and an asset tag for a certain asset data reaches or exceeds 80%, the asset data is preliminarily selected as target asset data.

In some embodiments, during the process of calculating the similarity, asset tags of all asset data in the geometry asset database can be traversed, a similarity between each asset tag and the target asset tag can be calculated, and all asset data with a similarity greater than or equal to 80% can be sifted out, thereby obtaining a plurality of pieces of target asset data meeting conditions. For example, if there also exists asset data B in the geometry asset database, its asset tags are "cyberpunk architecture, metallic texture, and neon colors", and a calculated similarity between the target asset tag "cyberpunk style" and "cyberpunk architecture" is 85%, exceeding the threshold of 80%, asset data B is also to be included in the set of the plurality of piece of target asset data. In this way, target asset data matching the target asset tag can be accurately sifted out from a large amount of asset data, providing an asset basis for subsequent environment reconstruction image processing.

S2025: Generating, through an asset generation model corresponding to the asset data, the plurality of pieces of target asset data based on the target asset tag corresponding to each asset category in response to all the similarities being less than the preset similarity threshold.

In some embodiments, if the similarities between the asset tags of all the asset data in the asset database and the target asset tag are all less than the preset similarity threshold, it indicates that there is no asset data matching the target asset tag in the asset database. In this case, an asset data generation process can be triggered, and the style instruction can be input to the LLM to generate a prompt corresponding to the style instruction.

In some embodiments, the memory may further store an asset generation model for generating target asset data. The prompt can be input to the asset generation model, so that the asset generation model generates target asset data based on the input prompt. Exemplarily, the asset generation model may be a "text-to-element" generation model, which can generate target asset data based on an input prompt in text format.

Based on different asset categories, the "text-to-element" generation model may be a variety of different generation models. Exemplarily, for a geometry asset category, the "text-to-element" generation model may adopt a real-time Gaussian splatting model, a fast NeRF (fast Neural Radiance Field) model, or a lightweight diffusion model to generate target asset data of the geometry asset category based on the prompt. For a material/shader asset category, the "text-to-element" generation model may adopt a specific diffusion model to generate texture maps for PBR (Physically-Based Rendering) material, such as Albedo maps, Normal maps, and Roughness maps, or directly generate shader code, that is, target asset data. For a VFX asset category, the "text-to-element" generation model can be used to dynamically adjust particle system parameters of the intelligent cockpit, generate HDRI (High Dynamic Range Imaging) lighting maps, or control volumetric light parameters to obtain target asset data.

In some embodiments, the "text-to-element" generation model can be invoked through a high-performance computing unit of the vehicle to generate the target asset data. Exemplarily, the high-performance computing unit may be an embedded NPU (Neural Network Processor).

According to the method provided in this embodiment of the present disclosure, a structured and searchable asset data system is established by creating a plurality of asset databases for different asset categories and associating each piece of asset data with asset tags generated through semantic processing. Based on this, an efficient and accurate asset data matching mechanism is implemented by calculating a similarity between a target asset tag and each asset tag under a same asset category and setting a preset similarity threshold as a determination criterion. When the similarity is greater than or equal to the similarity threshold, target asset data can be directly queried for and determined from the asset database, thereby fully utilizing existing resources of the asset database. When all the similarities are less than the similarity threshold, it indicates that there is no matching target asset data in the asset database. In this case, a plurality of pieces of target asset data corresponding to a target asset tag are generated through an asset generation model corresponding to the asset data, thereby reducing limitations of the asset database on determining the target asset data and improving efficiency and a scope of determining the target asset data.

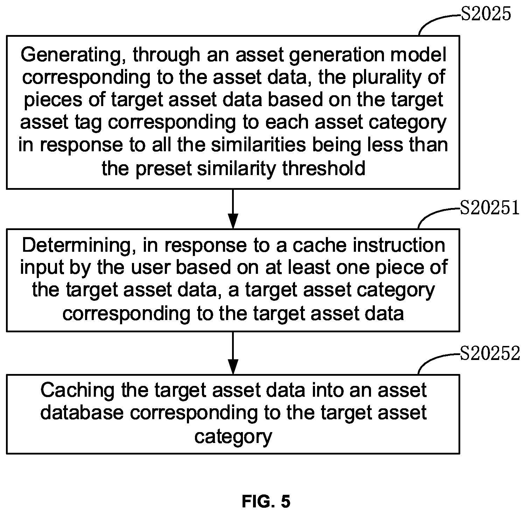

FIG. 5 is a schematic flowchart after step S2025 of the method for processing an environment reconstruction image according to an exemplary embodiment of the present disclosure.

As shown in FIG. 5, based on the above embodiment shown in FIG. 4, after step S2025, the method may include the following steps:
S20251: Determining, in response to a cache instruction input by the user based on at least one piece of the target asset data, a target asset category corresponding to the target asset data.

In some embodiments, prompt information can be generated based on the target asset data and displayed on the display screen of the intelligent cockpit. The prompt information is used for asking the user whether to save the target asset data. Exemplarily, the prompt information may be "Do you want to cache the generated building model of the 'cyberpunk style'?" to guide the user to input a cache instruction or a reject instruction based on the prompt information. Exemplarily, the cache instruction is used for indicating that the user wants to cache the target asset data, and the reject instruction is used for indicating that the user does not want to cache the target asset data.

When the user inputs the cache instruction, a target asset category to which the target asset data belongs can be identified, for example, a geometry asset category, a material/shader asset category, or a VFX asset category, so as to subsequently store the target asset data in the corresponding asset database based on the target asset category.

In some embodiments, if there are a plurality of pieces of target asset data, the user can input a cache instruction based on one or some pieces of the target asset data. Based on this, after the intelligent cockpit receives the cache instruction, the vehicle can determine, in response to the cache instruction, the target asset category of the target asset data specified by the cache instruction among the plurality of target asset data.

S20252: Caching the target asset data into an asset database corresponding to the target asset category.

In some embodiments, based on the target asset category, the corresponding asset database may be queried in the memory. For example, if the target asset category is the geometry asset category, the geometry asset database is queried. If the target asset category is the material/shader asset category, the material/shader asset database is queried. If the target asset category is the VFX asset category, the VFX asset database is queried. After the corresponding asset database is determined, the target asset data may be cached in the corresponding asset database.

In some embodiments, after the target asset data is cached in the corresponding asset database, semantic processing may be performed on the target asset data to generate an asset tag for the target asset data.

In some embodiments, before the target asset data is cached in the corresponding asset database, a temporary asset library may be created in the memory. The temporary asset library is used for temporarily caching target asset data that has not been stored in the asset database. Exemplarily, the temporary asset library may be a free area in the memory, and a size of the temporary asset library may be dynamically adjusted based on currently available space of the memory to avoid occupying excessive system resources.

To save memory space, the memory can periodically remove the target asset data from the temporary asset library. Exemplarily, a periodic removal mechanism can be set to automatically delete the target asset data from the temporary asset library based on a certain time period (such as weekly or monthly) to release temporary storage space and ensure efficient utilization of the memory.

According to the method provided in this embodiment of the present disclosure, target asset data corresponding to a cache instruction input by a user is determined through real-time interaction with the user, and a target asset category of the target asset data is determined, thereby determining a corresponding asset database in the memory based on the target asset category, and further storing the target asset data in an asset database of a same asset category. It can be seen that in the method provided in this embodiment of the present disclosure, target asset data generated by a generation model and satisfactory to the user can be cached in the asset database to increase asset diversity of the asset database. When the user issues the same or a similar style instruction next time, cached asset data can be quickly queried for and invoked directly from the expanded asset database, without the need to repeatedly start the generation model, thereby reducing consumption of computing resources and improving a response speed of asset style switching.

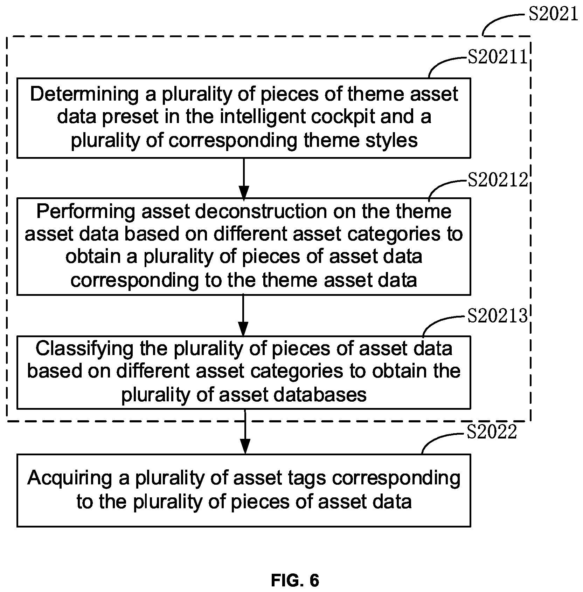

FIG. 6 is a schematic flowchart illustrating step S2021 of the method for processing an environment reconstruction image according to an exemplary embodiment of the present disclosure.

As shown in FIG. 6, based on the above embodiment shown in FIG. 4, step S2021 may include the following steps:
S20211: Determining a plurality of pieces of theme asset data preset in the intelligent cockpit and a plurality of corresponding theme styles.

In some embodiments, the memory of the intelligent cockpit may store a plurality of pieces of theme asset data and a plurality of corresponding theme styles. The plurality of pieces of theme asset data are complete sets of asset data corresponding to the plurality of theme styles. The theme styles may be pre-generated, and may be, for example, a minimalist style, a fresh style, and a night style. Each theme style corresponds to a complete set of asset data, and the complete set of asset data includes a plurality of pieces of asset data of different asset categories.

Exemplarily, the pre-generation method may use a PCG (Procedural Content Generation) technology or an AI-assisted generation tool, such as a 3D asset generator based on a diffusion model, to batch-create asset data conforming to the theme style. For example, for a theme of a "cyberpunk style", 10 different forms of hovercar asset data and 20 forms of futuristic building asset data may be generated. These pieces of asset data may follow unified specification standards, such as unified size proportions, interface specifications, and performance budgets (such as model polygon counts or texture sizes), to ensure that the asset data can be seamlessly combined to form an environment reconstruction image.

Exemplarily, for a minimalist style, the complete set of asset data may include geometric asset models of the minimalist style, such as building asset data, vehicle asset data, and vegetation asset data of the minimalist style. Shader/material asset data of the minimalist style, such as road surface material of the minimalist style and shader parameters corresponding to the minimalist style may also be included. VFX of the minimalist style, such as light effects and weather effects of the minimalist style may also be included.

S20212: Performing asset deconstruction on the theme asset data based on different asset categories to obtain a plurality of pieces of asset data corresponding to the theme asset data.

In some embodiments, the intelligent cockpit can perform deconstruction processing on the complete sets of asset data corresponding to the theme styles in the theme database in an offline state, so as to deconstruct the complete sets of asset data into a plurality of pieces of mutually independent asset data of different asset categories, to facilitate subsequent division of asset databases.

For ease of subsequent querying of target asset data, each piece of asset data may store an asset tag corresponding to the theme style. For example, for each piece of asset data of the "ink painting style", an asset tag representing the "ink painting style" may be stored.

S20213: Classifying the plurality of pieces of asset data based on different asset categories to obtain the plurality of asset databases.

After the complete sets of asset data of a plurality of different theme styles are deconstructed individually, a plurality of pieces of asset data of a same asset category can be grouped into one asset database based on the asset category.

Exemplarily, the intelligent cockpit can perform deconstruction processing on complete sets of asset data of the "ink painting style" and the "cyberpunk style" in the theme database to obtain a plurality of pieces of asset data of the "ink painting style" and a plurality of pieces of asset data of the "cyberpunk style". Geometry asset data of the "ink painting style" and geometry asset data of the "cyberpunk style" belong to a same asset category. Therefore, the geometry asset data of the "ink painting style" and the geometry asset data of the "cyberpunk style" can be jointly grouped into the geometry asset database. By analogy, the asset data corresponding to all the theme styles are classified according to the above method to obtain the plurality of asset databases. In this way, a plurality of pieces of asset data of different theme styles can be combined according to the style instruction to form a new environment reconstruction image. For example, when the style instruction is "Adjust the buildings to a 'cyberpunk style'," if a current theme style of the environment reconstruction image is a minimalist style, the buildings can be individually replaced with building assets of the "cyberpunk style" while retaining the other asset data of the minimalist style, thereby achieving diversified adjustment of asset styles.

According to the method provided in this embodiment of the present disclosure, a plurality of asset databases classified based on asset categories are constructed by deconstructing a plurality of pieces of theme asset data preset in the intelligent cockpit, thereby fully utilizing the existing theme asset data. Through deconstruction of complete sets of asset data, asset data of different theme styles can be cross-combined and used, enabling generation of mixed-style environment reconstruction images far exceeding a number of originally preset themes, thereby enriching diversity and flexibility of style switching.

In some embodiments, when no asset database is deployed in the memory of the intelligent cockpit, or when no target asset data matching the target asset tag is found in the asset database, a communication connection with a cloud server can also be established through the communication device. The cloud server can store a cloud asset database, and asset data stored in the cloud asset database may be different from asset data stored in a vehicle-side asset database, thereby expanding a query scope for target asset data. Exemplarily, in an example in which no target asset data matching the target asset tag is found in the asset database, the vehicle can upload the target asset tag to the cloud server through the communication device, and the cloud server can perform a secondary query in the cloud asset database based on the target asset tag.

Exemplarily, if the memory of the intelligent cockpit stores an asset database, a secondary query for the target asset data can be further performed in the cloud asset database through the cloud server when no target asset data matching the target asset tag is found in the asset database. If the memory of the intelligent cockpit stores no asset database, the cloud asset database can be directly queried for the target asset data through the cloud server.

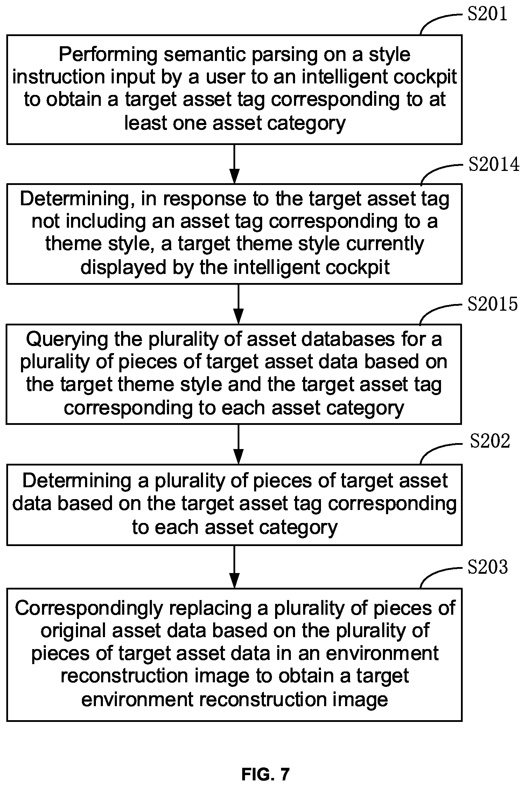

FIG. 7 is a schematic flowchart after step S201 of the method for processing an environment reconstruction image according to an exemplary embodiment of the present disclosure.

As shown in FIG. 7, based on the above embodiment shown in FIG. 2, after step S201, the method may further include the following steps:
S2014: Determining, in response to the target asset tag not including an asset tag corresponding to a theme style, a target theme style currently displayed by the intelligent cockpit.

When the style instruction does not involve adjustment of the theme style of the environment reconstruction image, the target asset tag obtained by performing semantic parsing on the style instruction does not include an asset tag corresponding to a theme style. Exemplarily, the style instruction may adjust asset styles of one or more pieces of asset data in the environment reconstruction image. In this case, the target asset tag corresponds to the asset style of the asset data. To ensure that the target asset data subsequently queried conforms to an overall style of the environment reconstruction image, the target theme style currently displayed by the intelligent cockpit can be obtained.

The target theme style refers to a current theme style of the environment reconstruction image of the intelligent cockpit. Exemplarily, the target theme style may be identified and acquired, through an application program for adjusting the theme style of the environment reconstruction image, after the intelligent cockpit receives the style instruction, so as to facilitate querying of the target asset data in combination with the target theme style.

S2015: Querying the plurality of asset databases for a plurality of pieces of target asset data based on the target theme style and the target asset tag corresponding to each asset category.

To map the target theme style to the target asset data, a new target asset tag can be generated by combining the target theme style and the target asset tag. For example, if the target theme style of the intelligent cockpit is a cartoon style and the target asset tag is "Add VFX of snowing," the target asset tag does not reflect a specific asset style of the "VFX of snowing". Therefore, the target theme style can be used as the asset style of the target asset tag, and the new target asset tag is "Add VFX of cartoon-style snowing."

Based on the new target asset tag, the VFX asset database can be positioned through "VFX of snowing", and the VFX asset database can be queried for specific target asset data such as snowflake image assets of the "cartoon style" and snowfall light and shadow effects through the "cartoon style."

According to the method provided in this embodiment of the present disclosure, when the target asset tag does not include the theme style, target asset data is queried for in combination with the current theme style to ensure stylistic harmony and consistency of a generated environment reconstruction image. When the style instruction of the user does not explicitly specify an asset theme, the asset database is automatically queried for the target asset data based on the target theme style currently displayed by the intelligent cockpit. It can be seen that the target environment reconstruction image generated in such a way can satisfy asset style adjustment of local asset data by the user while maintaining consistency with the target theme style of the intelligent cockpit, thereby improving overall style perception of the target environment reconstruction image and user experience.

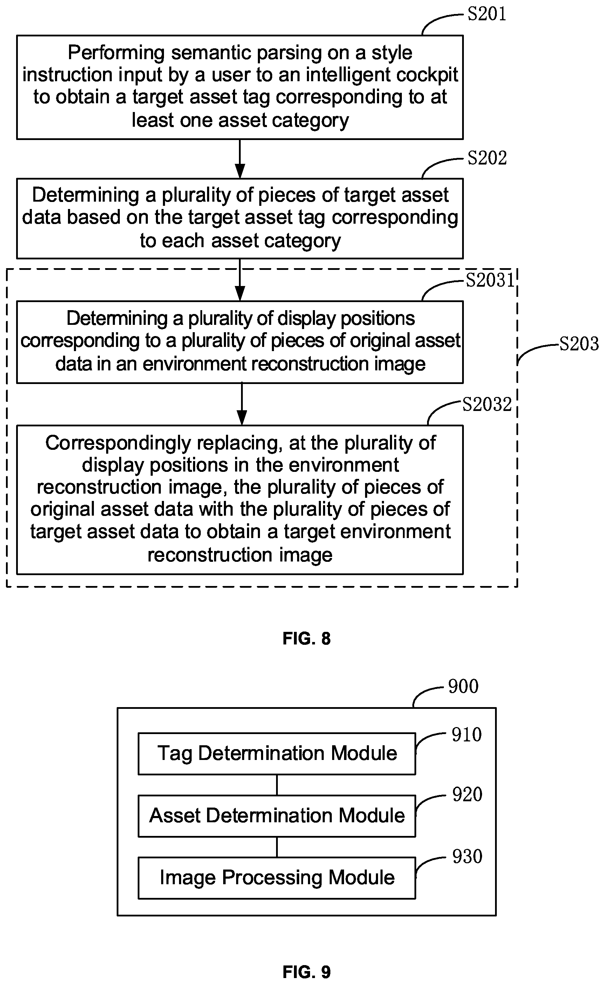

FIG. 8 is a schematic flowchart illustrating step S203 of the method for processing an environment reconstruction image according to an exemplary embodiment of the present disclosure.

As shown in FIG. 8, based on the above embodiment shown in FIG. 2, step S203 may further include the following steps:
S2031: Determining a plurality of display positions corresponding to the plurality of pieces of original asset data in the environment reconstruction image.

In some embodiments, the original asset data can be determined based on the asset category obtained by performing semantic parsing on the style instruction. For example, for the style instruction "Adjust the roadside grass to a 'cartoon' style," an asset style of "grass" needs to be adjusted. Because "grass" corresponds to a type of vegetation asset data in the geometry asset data, that is, grass asset data, the grass asset data in the environment reconstruction image can be marked as the original asset data.

After the determination of the original asset data, a plurality of display positions of the plurality of pieces of original asset data can be determined in the environment reconstruction image. Exemplarily, the display position can be represented in a form of coordinates. For example, in the environment reconstruction image, a three-dimensional coordinate system can be used to determine the coordinates of the display position. With a center of the display interface of the intelligent cockpit as an origin, an X-axis, Y-axis, and Z-axis coordinate system is established, and coordinate values of each piece of original asset data on different coordinate axes are determined, thereby determining the coordinates of the display position of the original asset data and providing a precise positional basis for subsequent replacement or adjustment of the target asset data based on the display position.

S2032: Correspondingly replacing, at the plurality of display positions in the environment reconstruction image, the plurality of pieces of original asset data with the plurality of pieces of target asset data to obtain the target environment reconstruction image.

In some embodiments, in the environment reconstruction image, each piece of asset data can be rendered through a rendering pipeline, and the plurality of pieces of rendered asset data are combined and displayed through a compositor. Exemplarily, the rendering pipeline is a processing flow consisting of a plurality of rendering stages, including, for example, stages such as vertex shading, geometry shading, and pixel shading. The compositor is used for blending and overlaying, according to a preset rule such as a hierarchical relationship, transparency, or a blending mode, the plurality of pieces of asset data processed by the rendering pipeline to ultimately form a complete environment reconstruction image.

The rendering pipeline can render to-be-rendered objects from original asset data to target asset data at the plurality of display positions in the environment reconstruction image, thereby replacing the original asset data with the target asset data in the environment reconstruction image. Moreover, the compositor combines and displays the target asset data and original asset data whose asset styles have not been switched in the environment reconstruction image to obtain the target environment reconstruction image.

According to the method provided in this embodiment of the present disclosure, the display positions of the original asset data in the environment reconstruction image are acquired and corresponding coordinates are determined, so that the target asset data can be rendered and displayed at the display positions through the rendering pipeline and the compositor after being found to obtain the target environment reconstruction image. It can be seen that, after asset style adjustment, the target asset data remains at the position of the original asset data, and an original asset layout of the environment reconstruction image is not changed due to the asset style adjustment. Moreover, using the compositor to combine the target asset data and the original asset data whose asset styles have not been adjusted can ensure that asset data of different styles in the target environment reconstruction image blend naturally, thereby maintaining overall harmony and realism of the scene.

### Exemplary Apparatus

FIG. 9 is a schematic diagram illustrating a structure of an apparatus for processing an environment reconstruction image according to an exemplary embodiment of the present disclosure. The apparatus 900 of this embodiment can be used for implementing the corresponding method embodiment of the present disclosure. Referring to FIG. 9, the apparatus 900 may include a tag determination module 910, an asset determination module 920, and an image processing module 930.

The tag determination module 910 is configured for performing semantic parsing on a style instruction input by a user to an intelligent cockpit to obtain a target asset tag corresponding to at least one asset category, the style instruction being used for instructing an adjustment of an asset style of the environment reconstruction image corresponding to the intelligent cockpit. The asset determination module 920 is configured for determining a plurality of pieces of target asset data based on the target asset tag corresponding to each asset category. The image processing module 930 is configured for correspondingly replacing, in the environment reconstruction image, a plurality of pieces of original asset data based on the plurality of pieces of target asset data to obtain a target environment reconstruction image.

In some embodiments, the tag determination module 910 is further configured for performing text conversion on the style instruction input by the user to the intelligent cockpit to obtain a text string; performing intent recognition on the text string to determine intent information for adjusting the environment reconstruction image; and then, performing structured conversion on the intent information to obtain the target asset tag corresponding to the asset category.

In some embodiments, the asset determination module 920 is further configured for determining a plurality of asset databases for different asset categories, wherein the asset database includes a plurality of pieces of asset data; then, acquiring a plurality of asset tags corresponding to the plurality of pieces of asset data, wherein the asset tag is a tag generated by performing semantic processing on the asset data; then, calculating a similarity between the target asset tag corresponding to each asset category and each asset tag for a same asset category; and determining the plurality of pieces of target asset data in response to the similarity being greater than or equal to a preset similarity threshold; or generating, through an asset generation model corresponding to the asset data, the plurality of pieces of target asset data based on the target asset tag corresponding to each asset category in response to all the similarities being less than the preset similarity threshold.

In some embodiments, the apparatus 900 may further include a storage module. The storage module is configured for determining, in response to a cache instruction input by the user based on at least one piece of the target asset data, a target asset category corresponding to the target asset data; and then, caching the target asset data into an asset database corresponding to the target asset category.

In some embodiments, the asset determination module 920 is further configured for determining a plurality of pieces of theme asset data preset in the intelligent cockpit and a plurality of corresponding theme styles; performing asset deconstruction on the theme asset data based on different asset categories to obtain a plurality of pieces of asset data corresponding to the theme asset data, wherein an asset tag corresponding to the theme style is stored in the asset data; and classifying the plurality of pieces of asset data based on different asset categories to obtain the plurality of asset databases.

In some embodiments, the asset determination module 920 is further configured for determining, in response to the target asset tag not including an asset tag corresponding to a theme style, a target theme style currently displayed by the intelligent cockpit; and querying the plurality of asset databases for a plurality of pieces of target asset data based on the target theme style and the target asset tag corresponding to each asset category.

In some embodiments, the image processing module 930 is further configured for determining a plurality of display positions corresponding to the plurality of pieces of original asset data in the environment reconstruction image; and correspondingly replacing, at the plurality of display positions in the environment reconstruction image, the plurality of pieces of original asset data with the plurality of pieces of target asset data to obtain the target environment reconstruction image.

For beneficial technical effects corresponding to the exemplary embodiment of this apparatus 900, refer to the corresponding beneficial technical effects of the exemplary method section described above, which are not repeated herein.

### Exemplary Electronic Device

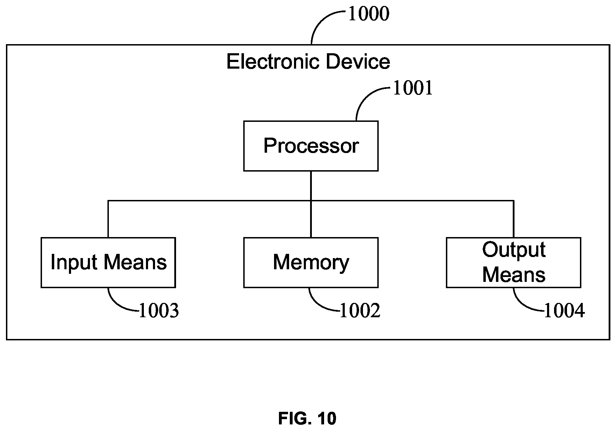

FIG. 10 is a diagram illustrating a structure of an electronic device according to an embodiment of the present disclosure.

As shown in FIG. 10, the electronic device 1000 includes at least one processor 1001 and a memory 1002.

The processor 1001 may be a CPU (Central Processing Unit) or another form of processing unit having a data processing capability and/or an instruction execution capability, and may control another component in the electronic device 1000 to perform a desired function.

The memory 1002 may include one or more computer program products. The computer program product may include various forms of computer readable storage media, such as a volatile memory and/or a non-volatile memory. The volatile memory may include, for example, a RAM (Random Access Memory) and/or a cache. The non-volatile memory may include, for example, a ROM, a hard disk, or a flash memory. The computer readable storage medium may store one or more computer program instructions. The processor 1001 may run the one or more computer program instructions to implement the method for processing an environment reconstruction image and/or other desired functions in the above embodiments of the present disclosure.

In an example, the electronic device 1000 may further include an input means 1003 and an output means 1004. The components are interconnected through a bus system and/or other forms of connection mechanisms (not shown).

The input means 1003 may further include, for example, a keyboard or a mouse.

The output means 1004 may output various information to the outside, and may include, for example, a display, a speaker, a printer, and a communication network and a remote output device connected thereto.

Certainly, for simplicity, only some components in the electronic device 1000 that are related to the present disclosure are shown in FIG. 10, and components such as a bus and an input/output interface are omitted. Besides, the electronic device 1000 may further include any other appropriate components depending on specific applications.

### Exemplary Computer Program Product And Computer Readable Storage Medium

In addition to the foregoing method and device, the embodiments of the present disclosure may also provide a computer program product including computer program instructions that, when run by a processor, cause the processor to perform the steps of the method for processing an environment reconstruction image according to the embodiments of the present disclosure that is described in the above "Exemplary Method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to perform the steps of the method for processing an environment reconstruction image according to the embodiments of the present disclosure that is described in the above "Exemplary Method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM or a flash memory), an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented by using the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

## Claims

1. A method for processing an environment reconstruction image, the method comprising:
performing (S201) semantic parsing on a style instruction input by a user to an intelligent cockpit to obtain a target asset tag corresponding to at least one asset category, the style instruction being used for instructing an adjustment of an asset style of the environment reconstruction image corresponding to the intelligent cockpit;
determining (S202) a plurality of pieces of target asset data based on the target asset tag corresponding to each asset category; and
correspondingly replacing (S203), in the environment reconstruction image, a plurality of pieces of original asset data based on the plurality of pieces of target asset data to obtain a target environment reconstruction image.

2. The method for processing an environment reconstruction image according to claim 1, wherein the performing (S201) semantic parsing on a style instruction input by a user to an intelligent cockpit to obtain a target asset tag corresponding to at least one asset category comprises:
performing (S2011) text conversion on the style instruction input by the user to the intelligent cockpit to obtain a text string;
performing (S2012) intent recognition on the text string to determine intent information for adjusting the environment reconstruction image; and
performing (S2013) structured conversion on the intent information to obtain the target asset tag corresponding to the asset category.

3. The method for processing an environment reconstruction image according to claim 1, wherein the determining (S202) a plurality of pieces of target asset data based on the target asset tag corresponding to each asset category comprises:
determining (S2021) a plurality of asset databases for different asset categories, wherein the asset database comprises a plurality of pieces of asset data;
acquiring (S2022) a plurality of asset tags corresponding to the plurality of pieces of asset data, wherein the asset tag is a tag generated by performing semantic processing on the asset data;
calculating (S2023) a similarity between the target asset tag corresponding to each asset category and each asset tag for a same asset category; and
determining (S2024) the plurality of pieces of target asset data in response to the similarity being greater than or equal to a preset similarity threshold; or
generating (S2025), through an asset generation model corresponding to the asset data, the plurality of pieces of target asset data based on the target asset tag corresponding to each asset category in response to all the similarities being less than the preset similarity threshold.

4. The method for processing an environment reconstruction image according to claim 3, wherein after the generating (S2025), through an asset generation model corresponding to the asset data, the plurality of pieces of target asset data based on the target asset tag corresponding to each asset category in response to all the similarities being less than the preset similarity threshold, the method further comprises:
determining (S20251), in response to a cache instruction input by the user based on at least one piece of the target asset data, a target asset category corresponding to the target asset data; and
caching (S20252) the target asset data into an asset database corresponding to the target asset category.

5. The method for processing an environment reconstruction image according to claim 3, wherein the determining (S2021) a plurality of asset databases for different asset categories comprises:
determining (S20211) a plurality of pieces of theme asset data preset in the intelligent cockpit and a plurality of corresponding theme styles;
performing (S20212) asset deconstruction on the theme asset data based on different asset categories to obtain a plurality of pieces of asset data corresponding to the theme asset data, wherein an asset tag corresponding to the theme style is stored in the asset data; and
classifying (S20213) the plurality of pieces of asset data based on different asset categories to obtain the plurality of asset databases.

6. The method for processing an environment reconstruction image according to claim 5, wherein after the performing (S201) semantic parsing on a style instruction input by a user to an intelligent cockpit to obtain a target asset tag corresponding to at least one asset category, the method further comprises:
determining (S2014), in response to the target asset tag not comprising an asset tag corresponding to a theme style, a target theme style currently displayed by the intelligent cockpit; and
querying (S2015) the plurality of asset databases for a plurality of pieces of target asset data based on the target theme style and the target asset tag corresponding to each asset category.

7. The method for processing an environment reconstruction image according to claim 1, wherein the correspondingly replacing (S203), in the environment reconstruction image, a plurality of pieces of original asset data based on the plurality of pieces of target asset data to obtain a target environment reconstruction image comprises:
determining (S2031) a plurality of display positions corresponding to the plurality of pieces of original asset data in the environment reconstruction image; and
correspondingly replacing (S2032), at the plurality of display positions in the environment reconstruction image, the plurality of pieces of original asset data with the plurality of pieces of target asset data to obtain the target environment reconstruction image.

8. An apparatus (900) for processing an environment reconstruction image, comprising:
a tag determination module (910), configured for performing semantic parsing on a style instruction input by a user to an intelligent cockpit to obtain a target asset tag corresponding to at least one asset category, the style instruction being used for instructing an adjustment of an asset style of the environment reconstruction image corresponding to the intelligent cockpit;
an asset determination module (920), configured for determining a plurality of pieces of target asset data based on the target asset tag corresponding to each asset category; and
an image processing module (930), configured for correspondingly replacing, in the environment reconstruction image, a plurality of pieces of original asset data based on the plurality of pieces of target asset data to obtain a target environment reconstruction image.

9. The apparatus (900) for processing an environment reconstruction image according to claim 8, wherein the tag determination module (910) is further configured for:
performing text conversion on the style instruction input by the user to the intelligent cockpit to obtain a text string;
performing intent recognition on the text string to determine intent information for adjusting the environment reconstruction image; and
performing structured conversion on the intent information to obtain the target asset tag corresponding to the asset category.

10. The apparatus (900) for processing an environment reconstruction image according to claim 8, wherein the asset determination module (920) is further configured for:
determining a plurality of asset databases for different asset categories, wherein the asset database comprises a plurality of pieces of asset data;
acquiring a plurality of asset tags corresponding to the plurality of pieces of asset data, wherein the asset tag is a tag generated by performing semantic processing on the asset data;
calculating a similarity between the target asset tag corresponding to each asset category and each asset tag for a same asset category; and
determining the plurality of pieces of target asset data in response to the similarity being greater than or equal to a preset similarity threshold; or
generating, through an asset generation model corresponding to the asset data, the plurality of pieces of target asset data based on the target asset tag corresponding to each asset category in response to all the similarities being less than the preset similarity threshold.

11. The apparatus (900) for processing an environment reconstruction image according to claim 10, wherein the apparatus (900) further comprises a storage module configured for:
determining, in response to a cache instruction input by the user based on at least one piece of the target asset data, a target asset category corresponding to the target asset data; and
caching the target asset data into an asset database corresponding to the target asset category.

12. The apparatus (900) for processing an environment reconstruction image according to claim 10, wherein the asset determination module (920) is further configured for:
determining a plurality of pieces of theme asset data preset in the intelligent cockpit and a plurality of corresponding theme styles;
performing asset deconstruction on the theme asset data based on different asset categories to obtain a plurality of pieces of asset data corresponding to the theme asset data, wherein an asset tag corresponding to the theme style is stored in the asset data; and
classifying the plurality of pieces of asset data based on different asset categories to obtain the plurality of asset databases.

13. The apparatus (900) for processing an environment reconstruction image according to claim 8, wherein the image processing module (930) is further configured for:
determining a plurality of display positions corresponding to the plurality of pieces of original asset data in the environment reconstruction image; and
correspondingly replacing, at the plurality of display positions in the environment reconstruction image, the plurality of pieces of original asset data with the plurality of pieces of target asset data to obtain the target environment reconstruction image.

14. A non-transitory computer readable storage medium, on which a computer program is stored, wherein the computer program, when executed by a processor (1001), causes the processor (1001) to implement the method for processing an environment reconstruction image according to any one of claims 1 to 7.

15. An electronic device (1000), comprising:
a processor (1001); and
a memory (1002), configured for storing instructions executable by the processor (1001), wherein
the processor (1001) is configured for reading the executable instructions from the memory (1002), and executing the instructions to implement the method for processing an environment reconstruction image according to any one of claims 1 to 7.
